# EUROPÄISCHE PATENTSCHRIFT

(11) **EP 4 403 491 B1**
(45) Veröffentlichungstag und Bekanntmachung des Hinweises auf die Patenterteilung: **02.04.2025**
(21) Anmeldenummer: 23152710.2
(22) Anmeldetag: 20.01.2023
(51) Int. Cl.: A47B 47/02, B65G 1/02, A47B 57/48, A47B 47/00

(54) **REGALSYSTEMVERBINDER**
SHELF SYSTEM CONNECTOR
CONNECTEUR DE SYSTÈME DE RAYONNAGE

(43) Veröffentlichungstag der Anmeldung: 24.07.2024
(73) Patentinhaber: Hölscher Holding GmbH, 50169 Kerpen (DE)
(72) Erfinder: KLEIN, Hans-Dieter, 57562 Herdorf (DE)
(74) Vertreter: KBN IP Patentanwälte Partnerschaft mbB

(56) Entgegenhaltungen:
- EP-A1- 3 719 393
- US-B2- 10 779 643
- US-B2- 9 775 433

## Beschreibung

Die Erfindung betrifft ein Verbindungselement zum Befestigen einer Regalstrebe zwischen zwei Wangen einer als Hohlprofil ausgebildeten Regalstütze eines Regalsystems sowie ein Regalsystem mit einem solchen Verbindungselement. Die betreffenden Regalstützen sind einseitig zwischen einer ersten Öffnungswange und einer zweiten Öffnungswange mit einer Öffnungsbreite geöffnet.

Bei offenen Regalsystemen werden zur Stabilisierung horizontale und/oder diagonale Regalstreben eingesetzt, die jeweils zwischen zwei Regalstützen des Regalsystems montiert werden und das Regal versteifen. Derartige Streben werden auch als Gefache eines Regals bezeichnet.

Die Regalstreben werden entweder von außen an den Regalstützen befestigt, beispielsweise über ein Verbindungselement wie im Dokument US 10,779,643 B2 beschrieben.

Das Dokument offenbart ein Verbindungselement, das einen vertikalen Regalpfosten umfasst und somit an diesem festlegbar ist und als C-förmiges Element mit einer der Öffnung gegenüberliegenden Einkerbung ausgeführt ist, so dass beim Verbinden der Enden des Elements mit Hilfe einer Schraube eine Bewegung der Enden aufeinander zu möglich wird. An dem Element sind Zapfen angebracht, an denen Regalstreben anbringbar sind.

Oder, im Falle von als Hohlprofilen gebildeten Regalstützen, die einseitig geöffnet sind, können die Regalstreben auch innerhalb der Öffnung des Hohlprofils an den Öffnungswangen installiert sein.

Insbesondere bei Rundrohr-Regalstreben mit einem flachen Schenkelende ist die Breite des Schenkelendes häufig viel kleiner als die Breite der Öffnung der Regalstütze. Für einen strammen, verbindungswirksamen Anschluss der Regalstrebe an die Regalstütze muss die Differenz zwischen der Breite des Schenkelendes und der Breite der Öffnung der Regalstütze kompensiert werden.

Das Problem wird derzeit dadurch gelöst, dass eine meist runde Hülse aus Stahl oder Kunststoff in den Abstand zwischen Regalstrebe und einer der Öffnungswangen der Regalstütze eingesetzt wird, wodurch die Differenz überbrückt wird und die Regalstrebe an der Regalstütze befestigt werden kann.

Bei den oben beschriebenen Hülsen, die aus einem Stück bestehen, ist nachteilig, dass die Regalstrebe immer an einer Wange, also am Rand der Regalstütze befestigt ist und es hierdurch zu einer Verdrehung der Stütze im Bereich des Anschlusses mit nachteiligen statischen Auswirkungen kommen kann. Die Installation einer horizontalen und einer diagonalen Regalstrebe an einem Kreuzungspunkt ist mit einer solchen Hülsenlösung nur sehr umständlich realisierbar, da eine entsprechend verkürzte und/oder geteilte Hülse vorgesehen sein muss, die zudem zwischen die Schenkelenden der Regalstrebe montiert werden muss.

Es ist daher Aufgabe Erfindung zumindest einen der zuvor genannten Nachteile zu überwinden. Insbesondere ist es Aufgabe der Erfindung ein Verbindungselement für ein Regalsystem bereitzustellen, welcher vielseitig einsetzbar ist und bei kostengünstiger Herstellung eine leichte und fehleroptimierte Montage ermöglicht.

Die Lösung der Aufgabe erfolgt erfindungsgemäß durch ein Verbindungselement für ein Regalsystem mit den Merkmalen des Anspruchs 1 sowie ein Regalsystem mit einem Verbindungselement mit den Merkmalen des Anspruchs 11. Bevorzugte Ausgestaltungen der Erfindung sind in den Unteransprüchen und der nachfolgenden Beschreibung angegeben, die jeweils einzeln oder in Kombination einen Aspekt Erfindung darstellen können.

Erfindungsgemäß ist vorgesehen, dass das Verbindungselement einen Körper mit einer Breite aufweist, wobei in einer ersten Seite des Körpers eine erste schlitzförmige Aufnahme vorgesehen ist und in einer zweiten Seite eine zweite und dritte schlitzförmige Aufnahme vorgesehen sind. Das Verbindungselement weist zudem zumindest eine durchgängige Befestigungsöffnung auf, die sich durch die Breite des Körpers und die erste schlitzförmige Aufnahme und/oder die zweite schlitzförmige Aufnahme hindurch erstreckt.

Die schlitzförmigen Aufnahmen dienen dabei der Aufnahme eines Endes einer Regalstrebe, insbesondere eines flachen Schenkelendes einer Rundrohr-Regalstrebe mit einer Befestigungsbohrung. In den Öffnungswangen sind ein oder mehrere parallele Lochpaare in Form von Lochreihen zur höhenverstellbaren Befestigung vorgesehen. Bei der bestimmungsgemäßen Montage des Regalsystems wird das Schenkelende der Regalstrebe über das Verbindungselement mit der Regalstütze verbunden. Die Breite des Körpers des Verbindungselements ist dabei auf die Öffnungsbreite der Regalstütze abgestimmt. Bevorzugt ist die Befestigung des Verbindungselements und der Regalstrebe mit der Regalstütze mittels einer Durchgangs-Schraube realisiert, wodurch eine geschlossene Konstruktion realisiert ist, die nun extrem verwindungssteif zur hohen Traglast beiträgt. Alternativ kann die Befestigung durch Verstiften erfolgen.

Durch das Vorsehen der zweiten schlitzförmigen Aufnahme kann eine weitere Regalstrebe mit der Regalstütze verbunden werden. Auf diese Weise kann eine erste Regalstrebe, z.B. eine horizontal Regalstrebe, über die erste schlitzförmige Aufnahme mit der Regalstütze verbunden werden und eine zweite Regalstreben, z.B. eine diagonale Regalstrebe, über die zweite schlitzförmige Aufnahme mit der Regalstütze verbunden werden.

Bevorzugt ist hierfür in dem Körper eine zweite durchgängige Befestigungsöffnung vorgesehen, die sich durch die Breite des Körpers und sich durch die zweite schlitzförmige Aufnahme erstreckt. Die Befestigung des Verbindungselements an der Regalstütze kann dann entsprechend an zwei übereinanderliegenden Lochpaaren der Öffnungswangen erfolgen. Ist nur eine durchgängige Befestigungsöffnung in dem Verbindungselement vorgesehen und soll die Möglichkeit bestehen zwei Regalstreben an das Verbindungselement anzuschließen, sollte die durchgängige Befestigungsöffnung durch die erste schlitzförmige Aufnahme und durch die zweite schlitzförmige Aufnahme hindurcherstrecken. Die schlitzförmigen Aufnahmen sind hierbei bevorzugt versetzt und überlappend zueinander angeordnet.

Die dritte schlitzförmige Aufnahme dient der Aufnahme eines Endes einer Regalstrebe. Dabei erstreckt sich die erste schlitzförmige Aufnahme in einer besonders vorteilhaften Ausgestaltung zentral entlang einer Mittelachse der Breite des Körpers des Verbindungselements. Die zweite und dritte schlitzförmige Aufnahme können dabei bevorzugt symmetrisch beidseitig der ersten schlitzförmigen Aufnahme angeordnet sein. Die dritte schlitzförmige Aufnahme entspricht dabei von der Formgebung der zweiten schlitzförmigen Aufnahme. Bei dieser Ausführungsform ist in vorteilhafter Weise eine zweite durchgängige Befestigungsöffnung vorgesehen, die sich durch die zweite und dritte schlitzförmige Aufnahme erstreckt.

Für eine besonders gute Handhabung des Verbindungselement ist die erste Seite des Körpers der zweiten Seite des Körpers gegenübergelegen.

Als besonderer Vorteil ist hier anzusehen, dass durch die mehreren schlitzförmigen Aufnahmen an verschiedenen Stellen und Seiten eine Verwendung desselben Verbindungselements in mehreren Montagesituationen möglich ist und somit die Montage vereinfacht ist. Es gibt auch kein langes Suchen/verwechseln mehr nach verschieden langen Rohrstummeln/-hülsen. Denn durch einfache Drehung des Verbindungselements um 180° ändert sich die Montagesituation und es kann ohne Unterbrechung weiter montiert werden. Durch die Ausgestaltung des Verbindungselements wird insgesamt in hohem Maße die Fehlerquote bei der Montage des Regalsystems gesenkt.

Die erste schlitzförmige Aufnahme dient zur Verschraubung im Falle von nur einer Regalstrebe, insbesondere einer horizontalen Regalstrebe. Durch die symmetrische Krafteinleitung der Regalstrebe entsteht keine Verdrehung der Regalstütze im Bereich des Anschusses.

Die doppelschlitzartige Ausgestaltung der der ersten schlitzförmigen Aufnahme gegenüberliegenden zweiten und dritten schlitzförmigen Aufnahmen dient zur Verschraubung im Kreuzungsbereich von zwei Regalstreben, insbesondere einer diagonalen und einer horizontalen Regalstrebe. Auf diese Weise wird ebenfalls eine gleichmäßige, symmetrische Krafteinleitung ermöglicht, sodass eine Verdrehung der Stütze im Bereich des Anschlusses weitgehend minimiert wird.

Neben den Schenkelenden von Rundrohrstreben können selbstverständlich auch andere Enden von Rohrstreben in das Verbindungelement eingesetzt werden. Die jeweilige Breite der schlitzförmigen Aufnahmen ist in vorteilhafterweise auf die verwendete Regalstrebe abgestimmt und beträgt bevorzugt weniger als 0,5, bevorzugt weniger als 1/6, weiter bevorzugt weniger als 1/8, insbesondere weniger als 1/16 der Breite des Körpers. Besonders bevorzugt haben die schlitzförmigen Aufnahmen eine Breite von weniger als 3 mm.

Die schlitzförmigen Aufnahmen weisen auch eine Höhe und eine Tiefe auf, wobei die Höhe der schlitzförmigen Aufnahmen sich bevorzugt, vollständig durch den Körper erstreckt, und wobei die Tiefe sich bevorzugt 30 - 60 mm in den Körper hinein erstreckt. Die geometrischen Abmessungen der schlitzförmigen Aufnahmen werden abhängig vom Regalsystem und Regalstreben sowie dem Anwendungsfeld funktional- und bewegungsoptimiert ausgestaltet.

Das Verbindungselement ist auf das jeweils verwendete Regalsystem abgestimmt. Der Körper des Verbindungselements hat bevorzugt eine Breite von 30 - 60 mm, besonders bevorzugt 35 - 55 mm. Die Höhe und Breite des Körpers des Verbindungselements betragen jeweils bevorzugt 30 - 60 mm.

Der Körper des Verbindungselement hat bevorzugt einen rechteckigen Querschnitt in Bezug auf Breite und Tiefe des Verbindungselements und ist bevorzugt quaderförmig ausgebildet.

Bei dem erfindungsgemäßen Verbindungselement ist die erste Seite des Körpers des Verbindungselements so angeordnet, dass eine Normale einer Fläche der ersten Seite quer bzw. rechtswinklig zur Breite des Körpers verläuft. Die zweite Seite des Körpers des Verbindungselements ist so angeordnet, dass eine Normale einer Fläche der zweiten Seite quer bzw. rechtswinklig zur Breite des Körpers verläuft. Bei der zuvor beschriebenen Ausführungsform mit quaderförmigem Körper bildet bei bestimmungsgemäßem Einbau bevorzugt die Stirnseite die erste Seite.

Besonders bevorzugt ist das Verbindungselement aus Kunststoff gefertigt. Auf diese Weise werden scharfe Kanten vermieden und die Verletzungsgefahr minimiert.

Ferner wird die Aufgabe erfindungsgemäß durch ein Regalsystem mit zumindest einer Regalstütze, einer Regalstrebe mit einem flachen Schenkelende und einem Verbindungselement gelöst. Die Regalstütze ist als Hohlprofil ausgebildet, welches einseitig zwischen einer ersten Öffnungswange und einer zweiten Öffnungswange mit einer Öffnungsweite geöffnet ist und auf den Öffnungswangen ein korrespondierendes Lochmuster aufweist, wobei das Verbindungselement eingerichtet ist, zwischen die Öffnungswangen eingesetzt zu werden und einen Körper mit einer auf die Öffnungsbreite abgestimmte Breite aufweist. In einer ersten Seite des Körpers des Verbindungselements ist eine erste schlitzförmige Aufnahme zur Aufnahme des flachen Schenkelendes der Regalstrebe und in einer zweiten Seite sind eine zweite und eine dritte schlitzförmige Aufnahme vorgesehen. Zudem weist das Verbindungselement zumindest eine durchgängige Befestigungsöffnung auf, die sich durch die Breite des Körpers des Verbindungselements und die erste schlitzförmige Aufnahme und/oder die zweite und dritte schlitzförmige Aufnahme erstreckt, wobei das Schenkelende der Regalstrebe bei bestimmungsgemäßer Montage des Regalsystems in eine der schlitzförmige Aufnahme eingesetzt ist und die Strebe über das Verbindungselement an der Regalstütze befestigt ist.

Die Regalstütze kann dabei beispielsweise einen Omega-förmigen, C-förmigen, U-förmigen oder einen anderweitig offenen Profilquerschnitt aufweisen.

Die Regalstütze ist bevorzugt aus kaltverformten Blech gefertigt. Um eine Verletzungsgefahr zu minimieren sind die Öffnungswangen der Regalstütze an der Außenkante abgerundet ausgebildet. Die Öffnungswangen können hierfür beispielsweise umgekantet oder gebördelt sein.

Das Verbindungselement des Regalsystems kann insbesondere auch gemäß der zuvor beschriebenen Ausführungsformen ausgestaltet sein.

Weitere Merkmale und Vorteile der Erfindung ergeben sich der nachfolgenden Beschreibung bevorzugter Ausführungsbeispiele anhand der Zeichnungen.

In den Zeichnungen zeigen:
- Fig. 1: eine perspektive Ansicht des erfindungsgemäßen Regalsystems in einer ersten Ausführungsform,
- Fig. 2a: eine perspektivische Ansicht des erfindungsgemäßen Verbindungselements in einer ersten Ausführungsform,
- Fig. 2b: das Verbindungselement aus Fig. 2a gedreht in perspektivischer Ansicht,
- Fig. 3: eine perspektive Ansicht der Verbindung einer Regalstrebe mit einer Regalstütze über das Verbindungselements aus Fig. 2a/2b,
- Fig. 4: eine perspektive Ansicht der Verbindung zweier Regalstreben mit einer Regalstütze über das Verbindungselement aus Fig. 2a/2b, und
- Fig. 5: ein Profilquerschnitt einer Regalstütze des Regalsystems aus Fig. 1.

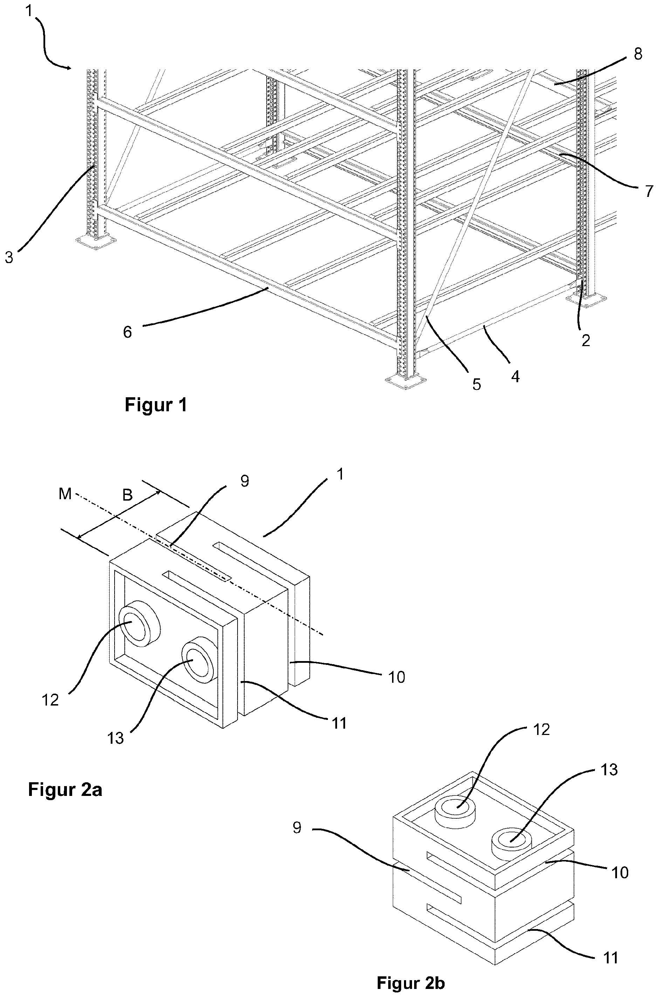

In Figur 1 ist eine Ausführungsform eines erfindungsgemäßen Regalsystems 1 gezeigt. Das Regalsystem 1 ist beispielhaft als Multi-Level-Regalsystem für den Anwendungsbereich mit automatischer Übergabe und/oder automatischer Entnahme in der Schwerkraft-Behälter-Fördertechnik ausgeführt. Das Regalsystem 1 umfasst mehrere Regalstützen 3, von denen die vorderen Regalstützen an der sogenannten Aufgabeseite durch Vorderwangen 6 miteinander verbunden sind und die hinteren Regalstützen an der sogenannten Entnahmeseite durch Hinterwangen 8. Im Zwischenbereich zwischen Vorder- und Hinterwangen 8 sind die Regalstützen mittels sogenannter Unterzüge 7 miteinander verbunden. Ferner sind in Durchgangsrichtung, zwischen den Vorderwangen 6, den Unterzügen 7 und den Hinterwangen 8 Führungsleisten vorgesehen, zwischen denen Rollenleisten eingesetzt werden (nicht dargestellt) und die zusammen einen Förderkanal bilden.

Zur Stabilisierung des Regalsystems 1 sind in Durchgangsrichtung zwischen den Regalstützen 3 horizontale und diagonale Regalstreben 4, 5 vorgesehen. Die Regalstreben 4, 5 werden über ein Verbindungselement 2 mit den Regalstützen 3 verbunden, wie nachfolgend näher erläutert. Die Querstabilisierung übernehmen die Vorder- und Hinterwange sowie die Unterzüge.

Die Figuren 2a und 2b zeigen eine bevorzugte Ausführungsform des erfindungsgemäßen Verbindungselements 2. Das Verbindungselement 2 hat eine quaderförmige Form mit einer Breite B. In einer ersten Seite ist eine erste schlitzförmige Aufnahme 9 vorgesehen, die sich zentral entlang einer Mittelachse M der Breite des Verbindungselements 2 erstreckt. In einer der ersten Seite gegenüberliegenden zweiten Seite sind eine zweite und dritte schlitzförmige Aufnahme 10, 11 in das Verbindungselement 2 eingebracht, die symmetrisch beidseitig der ersten schlitzförmigen Aufnahme 9 angeordnet sind. Quer zur ersten und zweiten Seite sind zwei voneinander beabstandetete durchgängige Befestigungsöffnung 12, 13 vorgesehen, wovon die erste sich durch die Breite des Verbindungselements und die erste schlitzförmige Aufnahme 9 und die zweite sich durch die Breite des Verbindungselements 2 und die zweite und dritte schlitzförmige Aufnahme 10, 11 hindurch erstreckt. Das Verbindungselement 2 ist aus Kunststoff gefertigt, wobei die umlaufenden Radien abgerundet ausgestaltet sind.

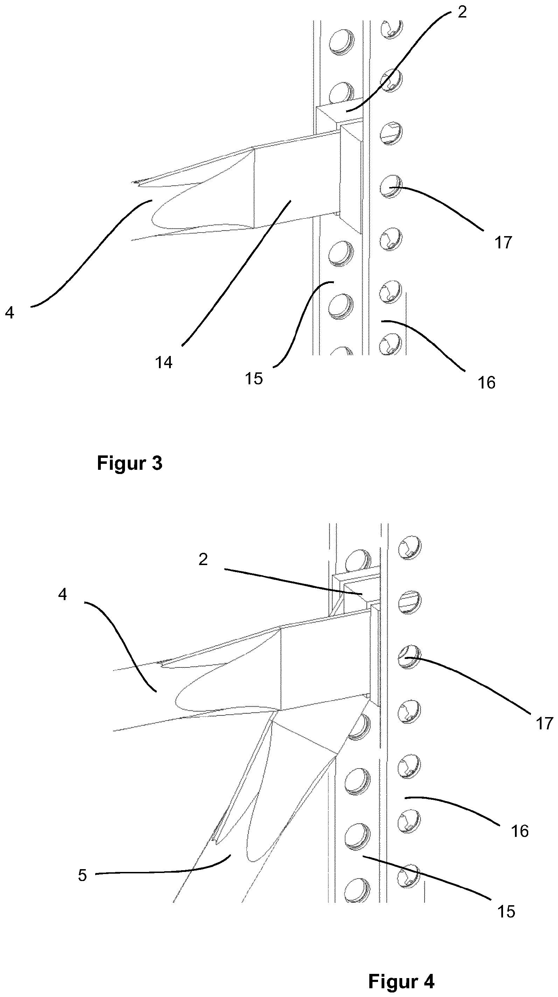

Die Figur 3 zeigt eine perspektive Ansicht der Verbindung einer Regalstrebe mit einer Regalstütze 3 über das Verbindungselement 2 aus Fig. 2a/2b. Es ist zu erkennen, wie das Verbindungselement 2 in die einseitig offene Regalstütze 3 zwischen deren Öffnungswangen 15, 16 eingesetzt ist. Die Öffnungswangen 15, 16 weisen jeweils parallele Lochreihen auf. Das Schenkelende 14 der als Rundrohr ausgeführten Regalstrebe 4 ist in die schlitzförmige Ausnehmung 9 des Verbindungselements 2 eingesetzt, und wird zusammen mit dem Verbindungselement 2 durch eine Durchgangsverschraubung (nicht dargestellt) mit der Regalstütze 3 verbunden.

Die Figur 4 zeigt eine perspektive Ansicht der Verbindung zweier Regalstreben 4, 5 mit einer Regalstütze 3 über das Verbindungselement 2 aus Fig. 2a/2b.

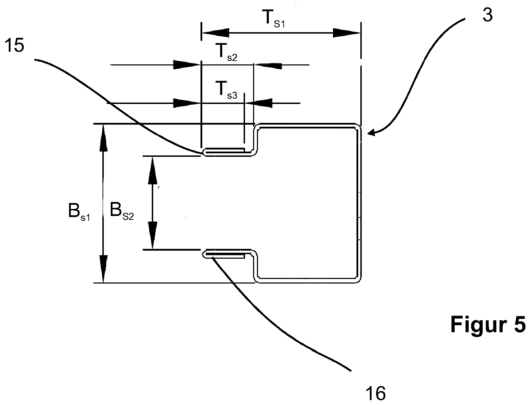

Eine vorteilhafte Ausführungsform der Regalstütze 3 des Regalsystems 1 aus Fig. 1 ist in der Fig. 5 dargestellt. Die Figur 5 zeigt einen Profilquerschnitt der Regalstütze 3 mit ihrer Breite B_{S1} und Tiefe T_{S1}. Die Regalstütze 3 ist aus Blech geformt. Im Bereich der beiden Öffnungswangen 15, 16 mit einer Tiefe T_{S2} ist das Blech umgekantet, um eine abgerundete Außenkante zu erreichen. In Verbindung mit dem Kunststoff-Verbindungselement 2 kann durch diese Maßnahme das Verletzungsrisiko minimiert werden. In der dargestellten Ausführungsform weist die Stütze einen Querschnitt von B_{S1} = 60 mm oder B_{S1} = 80 mm auf T_{S1} = 60 mm auf. Die Öffnung zwischen den Öffnungswangen B_{S2} hat eine Breite von 35 mm bei B_{S1} = 60 und 55 mm bei B_{S1} = 80. Die Tiefe der Öffnungswangen T_{S2} beträgt ca. 20 mm, wobei der umgekantete Abschnitt eine Tiefe T_{S3} von ca. 16 mm aufweist.

### Bezugszeichenliste:

- 1: Regalsystem
- 2: Verbindungselement
- 3: Regalstütze
- 4: horizontale Regalstrebe
- 5: diagonale Regalstrebe
- 6: Vorderwange
- 7: Unterzug
- 8: Hinterwange
- 9: erste schlitzförmige Aufnahme
- 10: zweite schlitzförmige Aufnahme
- 11: dritte schlitzförmige Aufnahme
- 12: erste durchgängige Befestigungsöffnung
- 13: zweite durchgängige Befestigungsöffnung
- 14: flaches Schenkelende
- 15: erste Öffnungswange
- 16: zweite Öffnungswange
- 17: Loch

## Patentansprüche

1. Verbindungselement (2) zum Befestigen einer Regalstrebe (4, 5) zwischen zwei Wangen einer als Hohlprofil ausgebildeten Regalstütze (3) eines Regalsystems (1), aufweisend einen Körper mit einer Breite, wobei in einer ersten Seite des Körpers eine erste schlitzförmige Aufnahme (9) zur Aufnahme eines Ende einer Regalstrebe (4, 5) vorgesehen ist und in einer zweiten Seite eine zweite schlitzförmige Aufnahme (10) und eine dritte schlitzförmige Aufnahme (11) jeweils zur Aufnahme eines Endes einer Regalstrebe (4, 5) vorgesehen ist, und wobei das Verbindungselement (2) zumindest eine durchgängige Befestigungsöffnung (12) aufweist, die sich durch die Breite des Körper und die erste schlitzförmige Aufnahme (9) und/oder die zweite und dritte schlitzförmige Aufnahme (10) hindurch erstreckt.

2. Verbindungselement (2) nach einem der vorhergehenden Ansprüche, **dadurch gekennzeichnet, dass** die erste Seite des Körpers der zweiten Seite des Körpers gegenüberliegt.

3. Verbindungselement (2) nach einem der vorhergehenden Ansprüche, **dadurch gekennzeichnet, dass** die erste schlitzförmige Aufnahme (9) sich zentral entlang einer Mittelachse (M) der Breite des Körpers des Verbindungselements (2) erstreckt und die zweite und dritte schlitzförmige Aufnahme (10, 11) symmetrisch beidseitig der ersten schlitzförmigen Aufnahme (9) angeordnet sind.

4. Verbindungselement (2) nach einem der vorhergehenden Ansprüche, **dadurch gekennzeichnet, dass** eine zweite durchgängige Befestigungsöffnung (13) vorgesehen ist, die sich durch die Breite des Körpers und durch die zweite und dritte schlitzförmige Aufnahme (10) erstreckt.

5. Verbindungselement (2) nach einem der vorhergehenden Ansprüche, **dadurch gekennzeichnet, dass** die Breite des Körpers 30 - 60 mm, insbesondere 35 - 55 mm beträgt.

6. Verbindungselement (2) nach einem der vorstehenden Ansprüche, **dadurch gekennzeichnet, dass** der Körper des Verbindungselements (2) einen rechteckigen Querschnitt aufweist und insbesondere quaderförmig ausgebildet ist.

7. Verbindungselement (2) nach einem der vorhergehenden Ansprüche, **dadurch gekennzeichnet, dass** das Verbindungselement (2) aus Kunststoff gebildet ist.

8. Verbindungselement (2) nach einem der vorhergehenden Ansprüche, **dadurch gekennzeichnet, dass** die schlitzförmigen Aufnahmen (9, 10, 11) eine Breite, eine Höhe und eine Tiefe aufweisen, wobei die Höhe der schlitzförmigen Aufnahmen (9, 10, 11) sich bevorzugt vollständig durch den Körper erstreckt, und wobei die Tiefe sich 30 - 60 mm in den Körper hinein erstreckt.

9. Verbindungselement (2) nach einem der vorhergehenden Ansprüche, **dadurch gekennzeichnet, dass** sich die erste schlitzförmige Aufnahme (9) und die weiteren schlitzförmigen Aufnahmen (10, 11) überlappen.

10. Verbindungselement (2) nach einem der vorhergehenden Ansprüche, **dadurch gekennzeichnet, dass** die Breite der schlitzförmigen Aufnahmen (9, 10, 11) weniger als 1/16 der Breite des Körpers beträgt.

11. Regalsystem (1) mit zumindest einer Regalstütze (3), einer Regalstrebe (4, 5) mit einem flachen Schenkelende (14) und einem Verbindungselement (2) nach einem der vorhergehenden Ansprüche, wobei die Regalstütze (3) als Hohlprofil ausgebildet ist, welches einseitig zwischen einer ersten Öffnungswange (15) und einer zweiten Öffnungswange (16) mit einer Öffnungsweite geöffnet ist und auf den Öffnungswangen (15, 16) ein korrespondierendes Lochmuster vorgesehen ist, wobei das Schenkelende (14) der Regalstrebe (4, 5) bei bestimmungsgemäßer Montage des Regalsystems (1) in eine der schlitzförmige Aufnahmen (9) eingesetzt ist und die Regalstrebe (4, 5) über das Verbindungselement (2) an der Regalstütze (3) befestigt ist.

12. Regalsystem (1), nach dem vorhergehenden Anspruch, **dadurch gekennzeichnet, dass** die Regalstütze (3) einen Omega-förmigen, C-förmigen, U-förmigen Profilquerschnitt aufweisen.

13. Regalsystem (1) nach einem der vorhergehenden Ansprüche, **dadurch gekennzeichnet, dass** die Öffnungswangen (15, 16) der Regalstütze (3) an der Außenkante abgerundet ausgebildet sind, insbesondere dass die Öffnungswangen (15, 16) umgekantet oder gebördelt sind.

## Claims

1. A connecting element (2) for fastening a rack brace (4, 5) between two flanges of a hollow-profile rack upright (3) of a rack system (1), comprising a body with a width, wherein a first slot-shaped receptacle (9) for receiving one end of a rack brace (4, 5) is provided in a first side of the body and a second slot-shaped receptacle (10) and a third slot-shaped receptacle (11) for receiving one end of a rack brace (4, 5) are each provided in a second side, and wherein the connecting element (2) has at least one through-fastening opening (12) which extends through the width of the body and through the first slot-shaped receptacle (9) and/or the second and third slot-shaped receptacles (10).

2. The connecting element (2) according to any preceding claim, **characterized in that** the first side of the body is opposite the second side of the body.

3. The connecting element (2) according to one of the preceding claims, **characterized in that** the first slot-shaped receptacle (9) extends centrally along a center axis (M) of the width of the body of the connecting element (2) and the second and third slot-shaped receptacles (10, 11) are arranged symmetrically on both sides of the first slot-shaped receptacle (9).

4. The connecting element (2) according to one of the preceding claims, **characterized in that** a second through-fastening opening (13) is provided, which extends through the width of the body and through the second and third slot-shaped receptacles (10).

5. The connecting element (2) according to one of the preceding claims, **characterized in that** the width of the body is 30-60 mm, in particular 35-55 mm.

6. The connecting element (2) according to one of the preceding claims, **characterized in that** the body of the connecting element (2) has a rectangular cross section and, in particular, is designed as a cuboid.

7. The connecting element (2) according to one of the preceding claims, **characterized in that** the connecting element (2) is made of plastic.

8. The connecting element (2) according to one of the preceding claims, **characterized in that** the slot-shaped receptacles (9, 10, 11) have a width, a height and a depth, the height of the slot-shaped receptacles (9, 10, 11) preferably extending completely through the body, and wherein the depth extends 30-60 mm into the body.

9. The connecting element (2) according to one of the preceding claims, **characterized in that** the first slot-shaped receptacle (9) and the further slot-shaped receptacles (10, 11) overlap.

10. The connecting element (2) according to one of the preceding claims, **characterized in that** the width of the slot-shaped receptacles (9, 10, 11) is less than 1/16 of the width of the body.

11. A rack system (1) comprising at least one rack upright (3), a rack brace (4, 5) having a flat leg end (14), and a connecting element (2) according to one of the preceding claims, wherein the rack upright (3) is configured as a hollow profile which is opened on one side between a first opening flange (15) and a second opening flange (16) with an opening width, and a corresponding hole pattern is provided on the opening flanges (15, 16). wherein the leg end (14) of the rack brace (4, 5) is inserted into one of the slot-shaped receptacles (9) when the rack system (1) is assembled as intended and the rack brace (4, 5) is attached to the rack upright (3) via the connecting element (2).

12. The rack system (1) according to the preceding claim, **characterized in that** the rack uprights (3) have an omega-shaped, C-shaped, U-shaped profile cross-section.

13. The rack system (1) according to one of the preceding claims, **characterized in that** the opening flanges (15, 16) of the rack upright (3) are designed such that the outer edge is rounded, in particular **in that** the opening side pieces (15, 16) are folded over or beaded.

## Revendications

1. Elément de liaison (2) pour fixer une entretoise de rack (4, 5) entre deux flancs d'ouverture d'un montant de rack (3) en profilé creux d'un système de rack (1), présentant un corps avec une largeur, un premier réceptacle en forme de fente (9) étant prévu dans un premier côté du corps pour recevoir une extrémité d'une entretoise de rack (4, 5) et, dans un deuxième côté, un deuxième réceptacle en forme de fente (10) et un troisième réceptacle en forme de fente (11) sont respectivement prévus pour recevoir une extrémité d'une entretoise de rack (4, 5), et dans lequel l'élément de liaison (2) comprend au moins une ouverture de fixation traversante (12) qui s'étend à travers la largeur du corps et le premier réceptacle en forme de fente (9) et/ou les deuxième et troisième réceptacles en forme de fente (10).

2. Élément de liaison (2) selon l'une quelconque des revendications précédentes, **caractérisé en ce que** le premier côté du corps est opposé au deuxième côté du corps.

3. Elément de liaison (2) selon l'une quelconque des revendications précédentes, **caractérisé en ce que** le premier réceptacle en forme de fente (9) s'étend de manière centrale le long d'un axe central (M) de la largeur du corps de l'élément de liaison (2) et les deuxième et troisième réceptacles en forme de fente (10, 11) sont disposés symétriquement de part et d'autre du premier réceptacle en forme de fente (9).

4. Élément de liaison (2) selon l'une quelconque des revendications précédentes, **caractérisé en ce qu'**il est prévu une deuxième ouverture de fixation traversante (13), qui s'étend à travers la largeur du corps et les deuxième et troisième réceptacles en forme de fente (10).

5. Élément de liaison (2) selon l'une des revendications précédentes, **caractérisé en ce que** la largeur du corps est de 30 à 60 mm, en particulier de 35 à 55 mm.

6. Élément de liaison (2) selon l'une des revendications précédentes, **caractérisé en ce que** le corps de l'élément de liaison (2) comprend une section transversale rectangulaire et est notamment de forme parallélépipédique.

7. Élément de liaison (2) selon l'une des revendications précédentes, **caractérisé en ce que** l'élément de liaison (2) est formé de matière plastique.

8. Élément de liaison (2) selon l'une des revendications précédentes, **caractérisé en ce que** les réceptacles en forme de fente (9, 10, 11) comprennent une largeur, une hauteur et une profondeur, la hauteur des réceptacles en forme de fente (9, 10, 11) s'étendant de préférence entièrement à travers le corps, et la profondeur s'étendant de 30 à 60 mm à l'intérieur du corps.

9. Élément de liaison (2) selon l'une quelconque des revendications précédentes, **caractérisé en ce que** le premier réceptacle en forme de fente (9) et les autres réceptacles en forme de fente (10, 11) se chevauchent.

10. Élément de liaison (2) selon l'une quelconque des revendications précédentes, **caractérisé en ce que** la largeur des réceptacles en forme de fente (9, 10, 11) est inférieure à 1/16 de la largeur du corps.

11. Système de rack (1) comprenant au moins un montant de rack (3), une entretoise de rack (4, 5) avec une extrémité plate (14) et un élément de liaison (2) selon l'une des revendications précédentes, le montant de rack (3) étant conçu comme un profilé creux qui est ouvert d'un côté entre un premier flanc d'ouverture (15) et un deuxième flanc d'ouverture (16) avec une largeur d'ouverture et un motif de trous correspondant étant prévu sur les flancs d'ouverture (15, 16), l'extrémité plate (14) de la entretoise de rack (4, 5) étant insérée dans l'un des réceptacles en forme de fente (9) lors du montage conforme du système de rack (1) et l'entretoise de rack (4, 5) étant fixée au montant de rack (3) par l'élément de liaison (2).

12. Système de rack (1) selon la revendication précédente, **caractérisé en ce que** le montant de rack (3) comprend une section transversale de profilé en forme d'oméga, en forme de C, en forme de U.

13. Système de rack (1) selon l'une des revendications précédentes, **caractérisé en ce que** les flancs d'ouverture (15, 16) du montant de rack (3) sont arrondies sur le bord extérieur, en particulier **en ce que** les flancs d'ouverture (15, 16) sont repliées ou ourlées.
